# EUROPEAN PATENT SPECIFICATION

(11) **EP 2 776 284 B1**
(45) Date of publication and mention of the grant of the patent: **17.08.2016**
(21) Application number: 12848179.3
(22) Date of filing: 07.11.2012
(51) Int. Cl.: H04N 5/225, B60R 11/04, G01D 11/30, B60R 11/00

(54) **FASTENING DEVICE FOR DETECTOR MEANS**
BEFESTIGUNGSVORRICHTUNG FÜR EIN DETEKTIONSMITTEL
DISPOSITIF DE FIXATION POUR MOYEN DE DÉTECTION

(30) Priority: 09.11.2011 SE 1151052
(43) Date of publication of application: 17.09.2014
(73) Proprietor: Scania CV AB, 151 87 Södertälje (SE)
(72) Inventor: OLSSON, Anders, SE-126 32 Hägersten (SE); DOUROS, Konstatin, SE-170 74 (SE); JONSSON, Stefan, SE-151 39 Södertälje (SE); KARLSSON, Samuel, SE-141 30 Huddinge (SE)
(74) Representative: Scania CV AB
(86) International application number: PCT/SE2012/051209
(87) International publication number: WO 2013/070157

(56) References cited:
- EP-A1- 1 625 976
- EP-A2- 2 407 350
- DE-A1- 10 354 458
- DE-A1- 19 804 165
- GB-A- 2 469 721
- US-A- 4 836 482
- US-A- 4 930 742
- US-A1- 2004 028 239
- US-A1- 2008 077 882

## Description

### TECHNICAL FIELD

The invention relates to a fastening device for detector means according to the preamble of claim 1. The invention relates also to a motor vehicle.

### BACKGROUND

Detectors are now widely used, e.g. in motor vehicles, for monitoring of various kinds. It is desirable such a detector be firmly fastened. In certain cases it needs to be pre-adjustable and/or post-adjustable so that its position/direction can be regulated to suit its particular location. There are for example various current applications in which a detector in the form of a camera is fitted in a vehicle's front window, e.g. to detect and identify objects such as unprotected road-users in the path of the vehicle.

Such a camera is preferably fitted on the inside of the vehicle's front window to protect it from external interference. A problem with having cameras on the inside is that vehicle front windows vary in slope and height, so the angle of the camera relative to the front window will vary depending on the configuration of the front window.

US 2008/0077882 A2 describes a fastening device according to the preamble of claim 1.

Fitting detector means in the form of cameras on front windows which differ in slope and/or height therefore involves using a camera fastening device which comprises a fastening element appropriate to the specific slope/height of the front window and suited to being fastened by adhesion/bonding to the inside of the front window, the correct angle for the camera being achieved by the configuration of the fastening element. A problem with such a solution is that it requires a plurality of different fastening elements/fastening devices. If a fastening element/fastening device intended for a certain front window is fitted to a different front window to which it is not suited, the fastening element/fastening device has to be removed and replaced, which is time-consuming and means having to scrap the fastening element removed.

### OBJECT OF THE INVENTION

An object of the present invention is to propose a fastening device for detector means which makes it easy to fit the detector means and fastens it firmly so that there is no risk of its position changing.

A further object of the present invention is to propose a fastening device for detector means which makes it easy to adjust the detecting direction of the detector means.

### SUMMARY OF THE INVENTION

This and other objects indicated by the description set out below are achieved by a fastening device for detector means and a motor vehicle of the kind indicated in the introduction which further present the features indicated in the respective characterising parts of the attached independent claim 1. Preferred embodiments of the fastening device and the motor vehicle are defined in the attached dependent claims 2-11.

According to the invention, the objects are achieved with a fastening device for support of detector means comprising a fastening element for applying the fastening device, comprising a fastening interface of the fastening element via which said detector means is intended to be supported via at least one fastening interface corresponding to that of the fastening element, by means of the fastening element. This makes it easy to fit the detector means and fasten it firmly so that there is no risk of its position changing. It also makes manufacture easy in that fastening interfaces which make interface connection possible between fastening elements and retaining means/detector means and any inserts with corresponding fastening interfaces are made with similar configurations for repeatability. Furthermore, the fastening device comprises at least one insert suited to being supported by the fastening element by means of a fastening interface which corresponds to that of the fastening element, and a fastening interface of the same kind as that of the fastening element, via which said detector means is intended to be supported. This makes it possible to achieve spacing by easy fitting via said fastening interface and affords the possibility of different angles relative to the fastening element to suit sloping fastening surfaces such as front windows of vehicles, and heights of fastening surfaces such as front windows of vehicles for desired setting of detecting directions for detector means.

According to an embodiment of the fastening device, said at least one fastening interface corresponding to that of the fastening element is borne by said detector means. This makes fitting easy in that the detector means can be applied directly to the fastening element via said fastening interface or that the detector means can be fastened directly to an insert via fastening interfaces of matching kinds.

According to an embodiment of the fastening device, said at least one insert has a wedge configuration for forming an angle between the fastening element and the detector means. This makes it possible to achieve spacing by easy fitting via said fastening interface, and affords the possibility of different angles relative to the fastening element to suit sloping fastening surfaces such as front windows of vehicles, and heights of fastening surfaces such as front windows of vehicles for desired setting of detecting directions for detector means.

According to an embodiment of the fastening device, said fastening interface is arranged to allow support of said at least one insert after turning within the range 0 to 360 degrees about a pivot axis which is at right angles to the fastening element. This makes flexible fitting possible in that adjustment of angles relative to fastening elements to suit sloping fastening surfaces such as front windows of vehicles can be effected with fewer parts where the insert has a wedgelike profile and is in one variant circular with a circular fastening interface, making it possible by turning the insert/inserts to vary the angle relative to the fastening element in different directions such that the detector means can by turning/adjustment of the insert/inserts be set in a large number of different directions to suit the shape and slope of the fastening surface.

According to an embodiment of the fastening device, said fastening interface is suited to allowing support of said at least one insert after turning 180 degrees about a pivot axis X which is at right angles to the fastening element. This makes flexible fitting possible in that adjustment of angles relative to fastening elements to suit sloping fastening surfaces such as front windows of vehicles can be achieved with fewer parts in cases where the insert is wedgelike.

In one embodiment the fastening device comprises more than one insert, affording the possibility of different spacings and different angles depending on the number of inserts and how they are combined and situated.

In one embodiment the fastening device comprises inserts with different wedge configurations, allowing more variation of angles relative to fastening elements.

In one embodiment the fastening device comprises inserts with similar wedge configurations, which simplifies manufacture in that identical inserts can be made.

According to an embodiment of the fastening device said fastening interface is of snap type, which makes fitting and removal easy.

According to an embodiment of the fastening device necessary viewing apertures are provided for said detector means when applied to the fastening device, affording the possibility of compact construction whereby the detector means/camera is allowed to view through the fastening element and the inserts which are connected via the fastening interface. This also makes it possible to incorporate the detector means/camera in such a way that it is protected from interference and unintentional adjustment.

### DESCRIPTION OF DRAWINGS

The present invention will be better understood by reading the detailed description set out below in conjunction with the attached drawings, in which the same reference notations refer to similar items throughout the many views and
Fig. 1 is a schematic sideview of a motor vehicle,
Fig. 2 is a schematic perspective view of a fastening device for detector means, e.g. a camera, in an assembled state according to an embodiment of the present invention,
Fig. 3a is a schematic perspective view of the fastening device in Fig. 2 when partly assembled,
Fig. 3b is a schematic plan view of a fastening element of the fastening device in Fig. 2,
Fig. 3c is a schematic plan view of an insert of the fastening device in Fig. 2;
Fig. 4 is a schematic perspective view of the parts of the fastening device in Fig. 2, in an unassembled state;
Fig. 5a is a schematic perspective view of a fastening device for detector means, e.g. a camera, in an assembled state according to an embodiment of the present invention;
Fig. 5b is a cutaway schematic perspective view of the fastening device in Fig. 5a;
Figs. 6a-c are schematic perspective views of parts of the fastening device in Fig. 5a in an unassembled state;
Fig. 7a is a schematic perspective view of a fastening device for detector means, e.g. a camera, in an assembled state for a predetermined position for the detector means according to an embodiment of the present invention;
Fig. 7b is a schematic sideview of the fastening device in Fig. 7a;
Fig. 7c is a schematic perspective view of the fastening device in Fig. 7a in an assembled state for another predetermined position for the detector means;
Fig. 7d is a schematic sideview of the fastening device in Fig. 7c;
Fig. 8a is a schematic perspective view of the fastening device in Fig. 7a in an assembled state for another predetermined position for the detector means;
Fig. 8b is a schematic sideview of the fastening device in Fig. 8a;
Fig. 9 is a schematic sideview of a fastening element of a fastening device according to Fig. 7a;
Fig. 10 comprises schematic perspective views of parts of the fastening device in Fig. 7a;
Fig. 11 is a schematic sideview of an insert of a fastening device according to Fig. 7a;
Fig. 12a is a schematic plan view of a fastening element of a fastening device according to Fig. 7a;
Fig. 12b is a schematic plan view of an insert of a fastening device according to Fig. 7a; and
Fig. 12c is a schematic plan view of a retaining means of a fastening device according to Fig. 7a.

### DESCRIPTION OF EMBODIMENTS

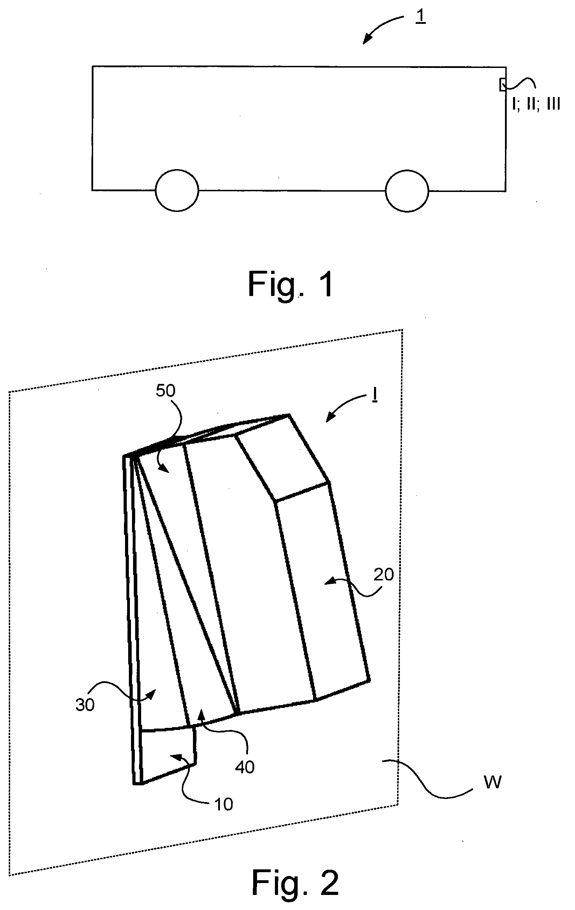

Figure 1 depicts a side view of a vehicle 1. The vehicle exemplified is a heavy vehicle in the form of a bus. It might alternatively be a truck or a car. It is provided with a fastening device I; II; III for detector means according to the present invention.

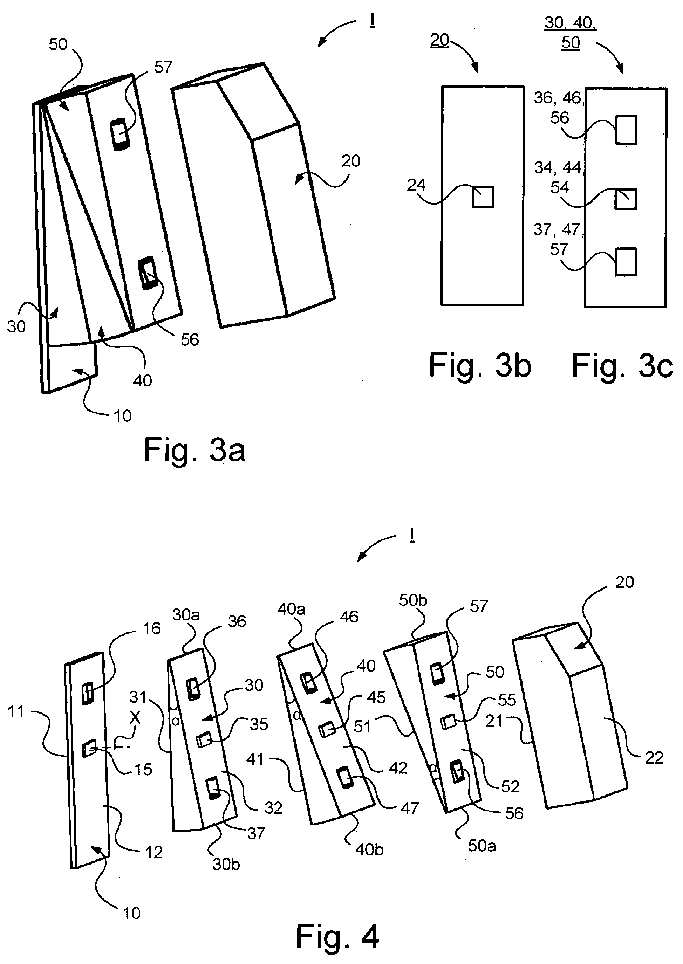

Fig. 2 is a schematic perspective view of a fastening device I for detector means, e.g. a camera, in an assembled state according to an embodiment of the present invention, Fig. 3a a perspective view of the fastening device I in Fig. 2 when partly assembled, Fig. 3b a plan view of part of the fastening device I in Fig. 2, and Fig. 4 a perspective view of the parts of the fastening device I in Fig. 2, in an unassembled state.

The fastening device I for support of detector means comprises a fastening element 10 for applying it. The fastening element 10 is intended to be fastened to a fastening surface W. In one variant the fastening surface W takes the form of the inside of a front window of a vehicle.

The fastening element 10 has accordingly a first fastening side 11 suited to being fastened to a fastening surface such as the inside of a front window of a vehicle. It further has a second fastening side 12 which is opposite to the first fastening side.

The fastening element 10 comprises a fastening interface 15 via which said detector means is intended to be supported. The fastening interface is situated on the second fastening side 12 of the fastening element. The fastening interface in this embodiment takes the form of a protrusion or protruding means.

The fastening element 10 has a viewing aperture 16 for said detector means. This viewing aperture is thus intended for the detector means, e.g. a camera, and the detector means is intended, when the fastening device I is applied, to be so directed that it can detect through said aperture.

The detector means is suited to being supported by a retaining means 20 which has a first side 21 intended to face towards the fastening element, and an opposite second side 22. The retaining means comprises a fastening interface 24 configured to correspond to the fastening interface 15 of the fastening element or to a fastening interface in accordance with the fastening interface 15 of the fastening element. The fastening interface 24 is therefore situated on the first side 21 of the retaining means 20. In this embodiment the fastening interface 24 takes the form of a recess configured to match with the protruding fastening interface 15 of the fastening element or with a fastening interface in accordance with such a fastening interface.

In an alternative variant, the detector means comprises said fastening interface 24 configured to correspond to the fastening interface of the fastening element or to a fastening interface in accordance with the fastening interface of the fastening element. In such an embodiment the fastening interface constitutes an integral part of the detector means and reference 20 denotes the detector means itself, e.g. a camera.

The fastening device I comprises a set of inserts 30, 40, 50 which each have a wedge configuration. Each of these inserts therefore takes the form of a wedge which narrows from one end 30b, 40b, 50b to the other end 30a, 40a, 50a. Each insert 30, 40, 50 thus has a first end region which is thinner and a corresponding second end region which is thicker. One or more inserts are intended to be placed between the fastening element 10 and the detector means/ retaining means 20 to alter the angle and hence the direction in which the detector means detects.

The inserts 30, 40, 50 each have a respective first side 31, 41, 51 and a corresponding second side 32, 42, 52, their first side being intended to face towards the second fastening side 12 of the fastening element, and the second side towards the detector means/ retaining means 20.

Each insert has a respective first fastening interface 34, 44, 54 configured to correspond to the fastening interface 15 of the fastening element 10 or to a fastening interface in accordance with the fastening interface 15 of the fastening element. These first fastening interfaces are therefore each situated, as illustrated in Fig. 3c, on the first side 31, 41, 51 of the respective insert 30, 40, 50. The first fastening interface 34, 44, 54 takes the form in this embodiment of a recess configured to match with the protruding fastening interface of the fastening element or with a fastening interface in accordance with the fastening interface 15. Each first fastening interface is thus suited to accommodating a fastening interface in accordance with fastening interface 15 of the fastening element. The first fastening interfaces 34, 44, 54 are configured in accordance with the fastening interface 24 of the retaining means 20.

Each insert 30, 40, 50 has a second fastening interface 35, 45, 55 configured to correspond to the fastening interface 24 of the retaining means/detector means or to a first fastening interface 34, 44, 54 of another insert. The second fastening interface 35, 45, 55 is therefore situated on the second side 32, 42, 52 of the respective insert. The second fastening interface takes the form in this embodiment of a protrusion configured to match with the recessed fastening interface of the retaining means 20 or with a first fastening interface of an insert. The second fastening interface 35, 45, 55 is thus suited to accommodating a fastening interface in accordance with the fastening interface of the retaining means/detector means or other fastening interfaces of inserts.

Each insert 30, 40, 50 has a respective first viewing aperture 36, 46, 56 situated in its first end region and a respective second viewing aperture 37, 47, 57 situated in its second end region.

In this embodiment the fastening device I comprises a first insert 30, a second insert 40 and a third inset 50. In the fastening device I according to Fig. 2 the fastening element 10, the first insert, the second insert and the third insert and the retaining means/detector means 20 are connected via respective fastening interfaces 15, 24, 25, 34, 35, 44, 45, 54, 55.

The fastening element 10 is connected to the first insert 30 via the fastening interface 15 on the fastening element and the first fastening interface 34 on the first insert, thus forming an interface connection between the fastening interface 15 and the first fastening interface 34.

The first insert 30 is connected to the second insert 40 via the second fastening interface 35 on the first insert and the first fastening interface 44 on the second insert, thus forming an interface connection in accordance with that between the fastening element 10 and the first insert 30.

The second insert 40 is connected to the third insert 50 via the second fastening interface 45 on the second insert and the first fastening interface 54 on the third insert, thus forming an interface connection in accordance with that between the fastening element 10 and the first insert 30.

In the embodiment in Fig. 2, the first insert 30 has its first end region placed against the upper region of the fastening element 10 and its second end region against the lower region of the fastening element so that the first viewing aperture 36 in the first insert 30 is brought into line with the viewing aperture 16 in the fastening element.

Moreover, the second insert 40 has its first end region placed against the first end region of the first insert 30 and consequently its second end region placed against the second end region of the first insert so that the first viewing aperture 46 in the second .insert 40 is brought into line with the first viewing aperture 36 in the first insert 30. The first and second inserts 30, 40 thus form relative to the plane of the fastening element 10 an angle which corresponds to the sum of their respective angles α.

Moreover, the third insert 50 has its second end region placed against the first end region of the third insert 40 and consequently its first end region placed against the second end region of the second insert so that the second viewing aperture 57 in the third insert 50 is brought into line with the first viewing aperture 46 in the second insert 40. The third insert is thus turned 180 degrees relative to the first and second inserts about a pivot axis which is perpendicular to the fastening element 10.

When the fastening element 10 is connected to the first insert 30, the second insert 40, the third insert 50 and the retaining means/detector means 20 to form fastening interfaces as above, the viewing aperture 16 in the fastening element 10, the first viewing aperture 36 in the first insert 30, the first viewing aperture 46 in the second insert 40 and the second viewing aperture 57 in the third insert 50 and the viewing aperture 26 in the retaining means 20 are brought into line, making it possible to view through them. Detection by means of the detector means, e.g. a camera, through said viewing apertures is thus made possible.

In one variant the angle α of each of the wedgelike inserts 30, 40, 50 is the same. Manufacture is thus simplified in that identical inserts can be constructed. By using one or more inserts the angle relative to the fastening element 10 can be varied and adapted to desired angles for the detector means. In one variant the angles of the respective wedgelike inserts 30, 40, 50 are different. This makes it possible to achieve a number of different angles by using desired numbers of inserts and combining them as desired.

The fastening device I thus allows detection at different angles relative to the plane of the fastening element 10. It also makes it possible via the fastening interface 15 of the fastening element and the fastening interface 24 of the retaining means/detector means 20 to place the retaining means/detector means directly against the fastening element to form an interface connection, in which case the retaining means/detector means will have the same slope as the fastening element and there will therefore be no angle between the fastening element and the retaining means/detector means.

In one variant one or more inserts might have first and second sides which are parallel and therefore serve only as spacing means.

In this embodiment the retaining means 20 may take the form of/be enclosed by a housing such that the detector means will be in the housing and the housing will enclose said fastening interface 24.

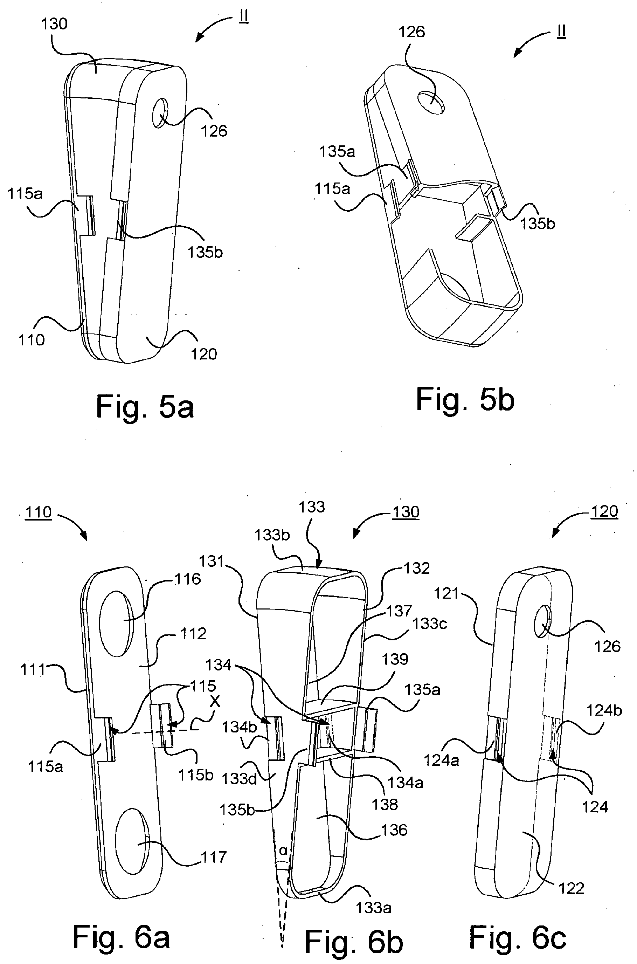

Fig. 5a is a schematic perspective view of a fastening device II for detector means, e.g. a camera, in an assembled state according to an embodiment of the present invention, Fig. 5b a cutaway perspective view of the fastening device II in Fig. 5a, and Figs. 6a-c perspective views of parts of the fastening device II in Fig. 5a.

The embodiment in Figs. 5a-b, 6a-c differs mainly from that in Figs. 2, 3a-c and 4 in the configuration of the respective fastening interfaces. In these diagrams the fastening device II has only one wedgelike insert 130 with an angle α, but might have more inserts with the same or different angles or with parallel sides.

The fastening device II in this embodiment comprises accordingly a fastening element 110 for applying it. This fastening element has a first side 111 intended to be fastened on a fastening surface, and a corresponding second fastening side 112 to which inserts 130 or retaining means/detector means 120 are intended to be fastened. The fastening surface takes in one variant the form of the inside of a front window of a vehicle in accordance with Fig. 2.

The fastening element 110 comprises a fastening interface 115 which is situated on its second fastening side 112 and via which said detector means is intended to be supported. The fastening interface 115 is in this embodiment a snap means 115 in the form of flexible means 115a, 115b which protrude at the middle of the respective long sides.

The insert 130 has a first fastening interface 134 situated on its first side 131 and configured to correspond to the fastening interface 115 of the fastening element 110. The first fastening interface is in this embodiment a snap means 134 in the form of recesses 134a, 134b situated on the middle of the respective long sides and configured to match with the respective protruding flexible means 115a, 115b of the fastening element's snap means. The fastening element is thus suited to being connected via respective snap means 115, 134 to form a snap connection.

The insert 130 has a second fastening interface 135 situated on its second side 132 and configured to correspond to the fastening interface of the retaining means/detector means or to a first fastening interface of another insert. The second fastening interface is in this embodiment a snap means 135 in the form of flexible means 135a, 135b protruding at the middle of the respective long sides and configured in accordance with the fastening element's snap means 115.

The detector means is arranged to be supported by a retaining means 120 with a first side 121 intended to face towards the fastening element 110, and an opposite side 122. This retaining means comprises a snap means 124 serving as a fastening interface 124 on the first side 121 in the form of recesses 124a, 124b situated at the middle of the respective long sides and configured to match with the respective protruding flexible means 115a, 115b of the fastening element's snap means or with the protruding flexible means 135a, 135b of the snap means of the insert 130. The retaining means 120 comprises a viewing aperture 126. In this variant the detector means is intended to be situated on the second side 122 of the retaining means so that it can detect through this viewing aperture. In an alternative variant, reference 120 denotes the actual detector itself and the fastening interface 126 is an integral part of the detector means, with the result that no viewing aperture is required.

The fastening element 110 has respective first and second viewing apertures 116, 117 for said detector means. In one variant it has only one viewing aperture. The apertures 116, 117 are thus intended for the detector means, e.g. a camera, and the detector means is intended, when the fastening device II is applied, to be so directed that it can detect through said apertures.

The insert 130 narrows from one end to the other. It thus has a first end region which is thinner and an opposite second end region which is thicker.

The insert 130 has running round it a border portion 133 with a first end 133a delineating the first end region and an opposite second end 133b delineating the second end region. This border portion is therefore of lower height at the first end 133a than at the second end 133b and has mutually spaced long sides 133c, 113d which narrow from the second end 133b to the first end 133a.

The insert 130 further comprises first and second bracing portions 138, 139 to stabilise it which run transversely between the middle regions of the respective long sides 133c, 133d. The first bracing portion 138 and the first end 133a of the border portion 133 form in conjunction with part of each long side a first viewing aperture 136. The second bracing portion 139 and the second end 133b of the border portion 133 form in conjunction with part of each long side a second viewing aperture 137.

In the applied state of the fastening device II as in Figs. 5a and 5b the first viewing aperture 116 of the fastening element, the second viewing aperture 137 of the insert 130 and the viewing aperture 126 of the retaining means 120 are brought into line so that the detector means can detect through them.

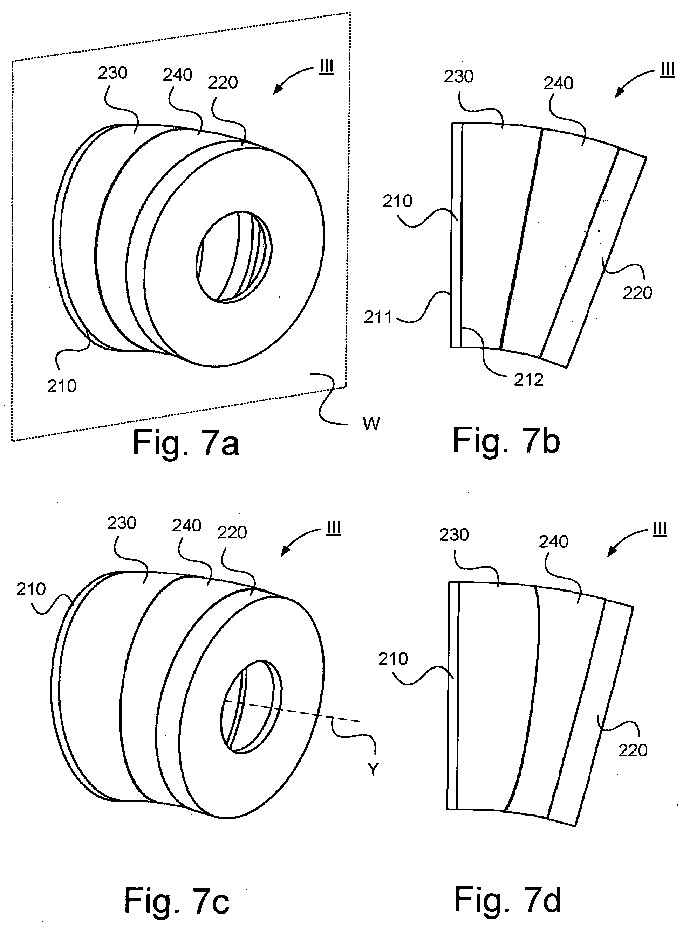

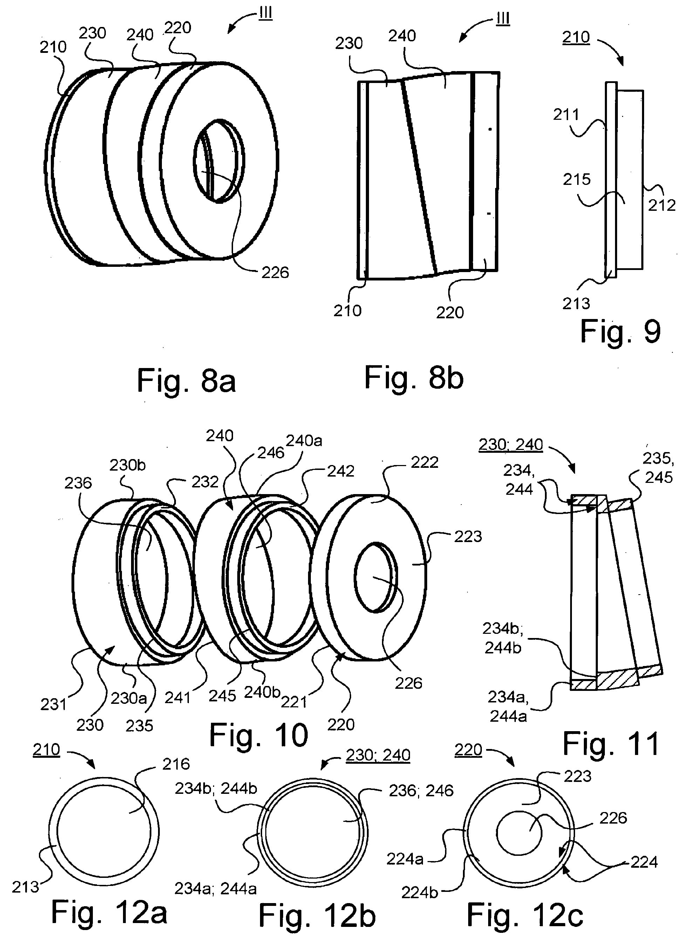

Figs. 7a-d and 8a-b are various schematic views of a fastening device III for detector means, e.g. a camera, in an assembled state for predetermined detector means positions according to an embodiment of the present invention, and Fig. 9 comprises perspective views of parts of said fastening device.

The fastening device III for support of detector means comprises a fastening element 210 for applying it. This fastening element is intended to be fastened to a fastening surface W which takes in one variant the form of the inside of a front window of a vehicle.

The fastening element 210 has accordingly a first fastening side 211 suited to being fastened to a fastening surface such as the inside of a front window of a vehicle. It further has a second fastening side 212 which is opposite to the first fastening side. The fastening element has a circular shape. It has an annular configuration. It has a first circular annular portion 213 with an outside diameter and an inside diameter, and a second circular annular portion 215 which protrudes from the side of the first annular portion which is opposite to said first fastening side. The second annular portion 215 has an outside diameter smaller than that of the first annular portion 213, and an inside diameter corresponding to that of the first annular portion. The second annular portion constitutes a border portion 215 running in a circumferential direction.

The fastening element 210 comprises a fastening interface 215 via which said detector means is intended to be supported. This fastening interface is situated on the second fastening side 212 of the fastening element. It takes in this embodiment the form of the second annular portion 215, i.e. the border portion running in a circumferential direction at a distance from the outside diameter of the first annular portion 213.

The fastening element 210 has a viewing aperture 216 for said detector means. This viewing aperture is thus intended for the detector means, e.g. a camera, and the detector means is intended, when the fastening device III is applied, to be so directed that it can detect through said aperture.

The fastening element 210 comprises a retaining means 220 by which the detector means is arranged to be supported. This retaining means has a first side 221 intended to face towards the fastening element, and an opposite second side 222.

The retaining means 220 has an annular configuration. It has a circular shape with outside diameter corresponding to that of the fastening element 210. It has a first circular annular portion 223 with an outside diameter and an inside diameter, and a second circular annular portion 224a which protrudes from the first annular portion 223 towards the fastening element. The second annular portion 224a has an outside diameter corresponding to that of the first annular portion 223, and an inside diameter substantially corresponding to the outside diameter of the second annular portion 215 of the fastening element. The second annular portion 224a of the retaining means 20 constitutes a border portion 224a running in a circumferential direction.

The retaining means 220 comprises a fastening interface 224 configured to correspond to the fastening interface 215 of the fastening element 210 or to a fastening interface in accordance with the fastening interface 215. The fastening interface 224 is situated accordingly on the first side 221 of the retaining means. It takes in this embodiment the form of the border portion 224a which has running round it a shoulder 224b which is part of the first annular portion 223 on the side facing towards the fastening element, within the border portion running in a circumferential direction, such that the fastening interface 224 is configured to match with the fastening interface 215 which takes the form of a border portion 215 running round the fastening element, or with a fastening interface in accordance with such a fastening interface. The border portion 224a of the retaining means 220 is thus arranged to surround the border portion 215 of the fastening element or a similar border portion.

In an alternative variant, the detector means comprises said fastening interface 224 configured to correspond to the fastening interface 215 of the fastening element 210 or to a fastening interface in accordance with the fastening interface 215. In such an embodiment, the fastening interface is an integral part of the detector means and reference 220 will denote the detector means itself, e.g. a camera.

The fastening device III comprises a set of inserts 230, 240 which each have a wedge configuration. They are thus each shaped like a wedge which narrows from one end 230a, 240a to the other end 230b, 240b. Each of these inserts is circular and is of annular configuration.

One or more inserts are intended to be placed between the fastening element 210 and the detector means/retaining means 220 to alter the angle and hence the direction in which the detector means detects.

Each of the inserts 230, 240 has a respective first side 231, 241 and a corresponding second side 232, 242, the first side being intended to face towards the second fastening side 212 of the fastening element 210, and the second side towards the detector means/retaining means 220.

Each of the inserts 230, 240 has a respective annular portion 234a, 244a which faces towards the fastening element 210 and which has an outside diameter and an inside diameter which substantially corresponds to the outside diameter of the second annular portion 215 of the fastening element. These annular portions each constitute a respective first border portion 234a, 244a which runs in a circumferential direction with an inside diameter substantially corresponding to the outside diameter of the border portion 215 of the fastening element.

Each insert has a first fastening interface 234, 244 configured to correspond to the fastening interface 215 of the fastening element 210 or to a fastening interface in accordance with the fastening interface 215. This first fastening interface is therefore situated on the first side 231, 241 of the respective insert. It takes in this embodiment the form of the respective first border portion 234a, 244a which runs in the circumferential direction and which has running round the inside of it in a circumferential direction a shoulder 234b, 244b on an axial level along the first border portion which substantially corresponds to the height/axial extent of the border portion of the fastening element.

The first fastening interface 234, 244 of the respective inserts is therefore configured to match with the fastening interface 215 of the fastening element 210 which takes the form of a border portion 215 running round the fastening element, or with a fastening interface in accordance with such a fastening interface. The first border portion 234a, 244a of the respective insert is thus arranged to surround the border portion 215 of the fastening element or a similar border portion.

The first fastening interface 234, 244 is thus arranged to accommodate a fastening interface in accordance with the fastening interface 215 of the fastening element 210. This first fastening interface is configured in accordance with the fastening interface 224 of the retaining means.

Each insert 230, 240 has in accordance with the fastening element 210 a first circular annular portion forming part of the first border portion with an outside diameter corresponding to that of the first border portion, and a second circular annular portion 235, 245 which protrudes from the first annular portion towards the retaining means. This second annular portion has an outside diameter smaller than that of the first annular portion, and an inside diameter. It constitutes a second border portion 235, 245 running in a circumferential direction and corresponding to the border portion 215 of the fastening element. It has an outside diameter substantially corresponding to the inside diameter of the border portion 224a of the retaining means and the first border portion 234a, 244a of the respective insert.

Each insert 230, 240 comprises a second fastening interface 235, 245 via which said detector means is intended to be supported. This second fastening interface is situated on the second side of the respective insert. It takes in this embodiment the form of the second border portion 235, 245 running in a circumferential direction.

The second fastening interface 235, 245 of the respective insert 230, 240 is configured to correspond to the fastening interface 224 of the retaining means/detector means or to a first fastening interface 234, 244 of another insert. It is therefore suited to accommodating a fastening interface in accordance with the fastening interface 224 of the retaining means/detector means or a first fastening interface of the respective insert.

Each insert 230, 240 has a first viewing aperture 236, 246 formed by the annular configuration of the respective insert.

In this embodiment, the fastening device III comprises a first insert 230 and a second insert 240. The fastening device III according to Figs. 7a-b comprises the fastening element 210, the first insert 230, the second insert 240 and the retaining means/detector means 220 which are connected via respective fastening interfaces 215, 224, 225, 234, 235, 244, 245 in a first state in which the first and second inserts are turned in such a way relative to one another and the fastening element that a maximum angle of the retaining means 220 to the fastening element is reached. Figs. 7c-d depict the fastening device III with the inserts 230, 240 turned 90 degrees from the state depicted in Figs. 7a-b, resulting in a different angle/direction between the retaining means and the fastening element. Figs. 8a-b depict the fastening device III with the inserts turned relative to one another so that the retaining means is substantially parallel with the fastening element. The possibility is thus afforded of mutual turning of the first and second inserts 230, 240 relative to one another and relative to the fastening element 210 and the retaining means 220 within the range 0-360 degrees, and also mutual turning of the retaining means relative to the inserts and the fastening element within the range 0-360 about a pivot axis Y.

The fastening element 210 is connected to the first insert 230 via the fastening interface 215 of the fastening element and the first fastening interface 234 on the first insert, thus forming an interface connection between the fastening interface 215 and the first fastening interface 234.

The first insert 230 is connected to the second insert 240 via the second fastening interface 235 on the first insert and the first fastening interface 244 on the second insert, thus forming between the second fastening interface 235 and the first fastening interface 244 an interface connection in accordance with that between the fastening element and the first insert.

When the fastening element 210 is connected to the first insert 230, the second insert 240 and the retaining means/detector means 220 to form a fastening interface as above, the viewing aperture 216 of the fastening element, the viewing aperture 236 of the first insert, the viewing aperture 246 of the second insert and the viewing aperture 226 of the retaining means 220 are brought into line, making it possible to view through them. Detection by means of the detector means, e.g. a camera, through said viewing apertures is thus made possible.

The fastening device III thus makes detection possible at different angles relative to the plane of the fastening element 210. It also makes it possible, via the fastening interface 215 on the fastening element 210 and the fastening interface 224 on the retaining means/detector means 220, to place the retaining means/detector means directly against the fastening element, thus forming an interface connection, in which case the retaining means/detector means will have the same slope as the fastening element and there will therefore be no angle between the fastening element and the retaining means/detector means.

The border portions 224a, 234a, 244a surrounding the fastening interfaces have substantially the same height/axial extent as the protruding border portions 215, 235, 245 of the fastening interfaces which they are intended to surround in order to create said interface connections.

Said interface connections may comprise any suitable form of connection, e.g. snap connections, wedge connections or the like.

Fastening interfaces in one embodiment of the fastening device III may take the form of any suitable circular protrusions arranged to match with a corresponding circular recess. The circular fastening interfaces may in one alternative variant be situated centrally.

The fastening devices I; II; III described above with fastening interfaces of fastening elements via which a detector means is intended to be supported via at least one fastening interface, corresponding to that of the fastening element, by means of the fastening element, which fastening device further comprises at least one insert arranged to be supported by the fastening element by means of a fastening interface corresponding to that of the fastening element, and a fastening interface which is of the same kind as that of the fastening element and via which said detector means is intended to be supported, which fastening interface takes the form of protrusions/recesses or snap means. Said fastening interface may take the form of any suitable fastening interface, e.g. groove/rail, fastening interface of lego type, fastening interface comprising rotary connection etc.

## Claims

1. A fastening device (I; II; III) for support of detector means (20; 120; 220) intended to be fastened to a fastening surface of a vehicle comprising a fastening element (10; 110; 210) for applying the fastening device (I; II; III), wherein a fastening interface (15; 115; 215) on the fastening element (10; 110; 210) via which said detector means is intended to be supported via at least one fastening interface (24; 34; 44, 54; 124, 134, 224, 234, 244) which corresponds to that of the fastening element (10; 110; 210), by means of the fastening element (10; 110; 210), **characterised by** at least one insert (30, 40, 50; 130; 230; 240) suited to being supported by the fastening element (10; 110; 210) by means of a fastening interface (34, 44, 54; 134; 234, 244) which corresponds to the fastening interface (15; 115; 215) on the fastening element (10; 110; 210), and a fastening interface (35, 45, 55; 135; 235, 245) of the same kind as the fastening interface (15; 115; 215) on the fastening element (10; 110; 210), via which said detector means is intended to be supported, further said at least one insert (30, 40, 50; 130; 230; 240) has a wedge configuration to achieve angling between the fastening element (10; 110; 210) and the detector means.

2. A fastening device according to claim 1, such that said at least one fastening interface (24; 124) corresponding to the fastening interface (15; 115; 215) of the fastening element (10; 110) is supported by said detector means.

3. A fastening device according to claim 1, such that said fastening interface (210) is arranged to allow support of said at least one insert (230, 240) after turning within the range 0 to 360 degrees about a pivot axis (Y) which is perpendicular to the fastening element (210).

4. A fastening device according to any one of claims 1-3, such that said fastening interface (15, 35, 45, 55; 115, 135; 215, 235) is arranged to allow support of said at least one insert (30, 40, 50, 130; 230; 240) after turning 180 degrees about a pivot axis (X; Y) which is perpendicular to the fastening element (10; 110; 210).

5. A fastening device according to any one of claims 1-3, comprising more than one insert.

6. A fastening device according to claim 4, comprising inserts (30, 40, 50, 130; 230; 240) with different wedge configurations.

7. A fastening device according to claim 4 or 5, comprising inserts (30, 40, 50, 130) with similar wedge configurations.

8. A fastening device according to any one of the foregoing claims, such that said fastening interfaces (115, 124, 134, 135) are of snap type.

9. A fastening device according to any one of claims 1-8, such that necessary viewing apertures (16, 26, 36, 37, 46, 47, 56, 57; 116, 117, 126, 136, 137; 216; 226, 236, 246) are provided for said detector means in applied states of the fastening device (I; II; III).

10. A motor vehicle (1) provided with a fastening device (I; II; III) according to any one of claims 1-9.

11. A motor vehicle according to claim 10, such that said fastening device (I; II; III) is intended to be applied internally to the vehicle's front window (W).

## Patentansprüche

1. Befestigungsvorrichtung (I; II; III) zur Unterstützung eines Detektormittels (20; 120; 220), die zum Befestigen an einer Befestigungsoberfläche eines Fahrzeugs vorgesehen ist, umfassend ein Befestigungselement (10; 110; 210) zum Anbringen der Befestigungsvorrichtung (I; II; III) mittels des Befestigungselements (10; 110; 210), wobei eine Befestigungsschnittstelle (15; 115; 215) an dem Befestigungselement (10; 110; 210) vorgesehen ist, das vorgesehen ist zum Unterstützen des Detektormittels über wenigstens eine Befestigungsschnittstelle (24; 34; 44, 54; 124, 134, 224, 234, 244), die der des Befestigungselements (10; 110; 210) entspricht, **gekennzeichnet durch** wenigstens eine Einlage (30, 40, 50; 130; 230; 240), die dann geeignet ist, um **durch** das Befestigungselement (10; 110; 210) unterstützt zu werden **durch** Mittel einer Befestigungsschnittstelle (34, 44, 54; 134; 234, 244), die der Befestigungsschnittstelle (15; 115; 215) auf dem Befestigungselement (10; 110; 210) entspricht, und eine Befestigungsschnittstelle (35, 45, 55; 135; 235, 245) derselben Art, wie die Befestigungsschnittstelle (15; 115; 215) auf dem Befestigungselement (10; 110; 210), das vorgesehen ist zum Unterstützen des Detektormittels, wobei weiter die wenigstens eine Einlage (30, 40, 50; 130; 230; 240) eine keilförmige Anordnung aufweist, um ein Ausrichten zwischen dem Befestigungselement (10; 110; 210) und dem Detektormittel zu erreichen.

2. Befestigungsvorrichtung nach Anspruch 1, wobei die wenigstens eine Befestigungsschnittstelle (24; 124), die einer Befestigungsschnittstelle (15; 115; 215) des Befestigungselements (10; 110) entspricht, durch das Detektormittel unterstützt wird.

3. Befestigungsvorrichtung nach Anspruch 1, wobei die Befestigungsschnittstelle (210) angeordnet ist, um eine Unterstützung der wenigstens einen Einlage (230, 240) nach einem Drehen innerhalb des Bereichs von 0 bis 360 Grad um eine Drehachse (Y) zu erlauben, welche senkrecht zu dem Befestigungselement (210) ist.

4. Befestigungsvorrichtung nach einem der Ansprüche 1 bis 3, wobei die Befestigungsschnittstelle (15, 35, 45, 55; 115, 135; 215, 235) angeordnet ist, um eine Unterstützung der wenigstens einen Einlage (30, 40, 50, 130; 230; 240) nach einem Drehen um 180 Grad um eine Drehachse (X; Y) zu erlauben, welche senkrecht zu dem Befestigungselement (10; 110; 210) ist.

5. Befestigungsvorrichtung nach einem der Ansprüche 1 bis 3, umfassend mehr als eine Einlage.

6. Befestigungsvorrichtung nach Anspruch 4, umfassend Einlagen (30, 40, 50, 130; 230; 240) mit unterschiedlichen keilförmigen Anordnungen.

7. Befestigungsvorrichtung nach Anspruch 4 oder 5, umfassend Einlagen (30, 40, 50, 130) mit ähnlichen keilförmigen Anordnungen.

8. Befestigungsvorrichtung nach einem der vorherigen Ansprüche, wobei die Befestigungsschnittstellen (115, 125, 134, 135) vom Schnapp-Typ sind.

9. Befestigungsvorrichtung nach einem der Ansprüche 1 bis 8, wobei erforderliche Betrachtungsapparaturen (16, 26, 36, 37, 46, 47, 56, 57; 116, 117, 126, 136, 137; 216; 226, 236, 246) für die Detektormittel in angebrachten Zuständen der Befestigungsvorrichtung (I; II; III) vorgesehen sind.

10. Kraftfahrzeug (1), ausgestattet mit einer Befestigungsvorrichtung (I; II; III) nach einem der Ansprüche 1 bis 9.

11. Kraftfahrzeug nach Anspruch 10, wobei die Befestigungsvorrichtung (I; ; II ; III) vorgesehen ist, um im Inneren an einer Fahrzeugfrontscheibe (W) angebracht zu werden.

## Revendications

1. Dispositif de fixation (I ; II ; III) pour supporter un moyen formant détecteur (20 ; 120 ; 220) destiné à être fixé sur une surface de fixation d'un véhicule comprenant un élément de fixation (10 ; 110 ; 210) permettant l'application du dispositif de fixation (I ; II ; III), dans lequel une interface de fixation (15 ; 115; 215) se trouve sur l'élément de fixation (10 ; 110; 210) pour permettre de supporter ledit moyen formant détecteur à l'aide d'au moins une interface de fixation (24 ; 34 ; 44, 54 ; 124, 134, 224, 234, 244) qui correspond à celle de l'élément de fixation (10 ; 110 ; 210), au moyen de l'élément de fixation (10 ; 110 ; 210), **caractérisé par** au moins un insert (30, 40, 50 ; 130 ; 230 ; 240) apte à être supporté par l'élément de fixation (10 ; 110 ; 210) au moyen d'une interface de fixation (34 ; 44, 54 ; 134, 234, 244) qui correspond à l'interface de fixation (15; 115 ; 215) sur l'élément de fixation (10 ; 110 ; 210), et une interface de fixation (35 ; 45, 55; 135, 235, 245) du même type que l'interface de fixation (15 ; 115 ; 215) sur l'élément de fixation (10 ; 110 ; 210) pour permettre de supporter ledit moyen formant détecteur, ledit insert (30, 40, 50 ; 130 ; 230 ; 240), au moins au nombre de un, présentant en outre une configuration en coin pour former un angle entre l'élément de fixation (10 ; 110 ; 210) et le moyen formant détecteur.

2. Dispositif de fixation selon la revendication 1, tel que ladite interface de fixation (24 ; 124), au moins au nombre de une, correspondant à l'interface de fixation (15 ; 115 ; 215) de l'élément de fixation (10 ; 110) est supportée par ledit moyen formant détecteur.

3. Dispositif de fixation selon la revendication 1, tel que ladite interface de fixation (210) est agencée de façon à permettre le support dudit insert (230, 240), au moins au nombre de un, après rotation dans la plage de 0 à 360 degrés autour d'un axe de pivotement (Y) perpendiculaire à l'élément de fixation (210).

4. Dispositif de fixation selon l'une quelconque des revendications 1 à 3, tel que ladite interface de fixation (15, 35, 45, 55 ; 115, 135 ; 215, 235) est agencée de façon à permettre le support dudit insert (30, 40, 50, 130 ; 230 ; 240), au moins au nombre de un, après rotation de 180° degrés autour d'un axe de pivotement (X ; Y) perpendiculaire à l'élément de fixation (10 ; 110 ; 210).

5. Dispositif de fixation selon l'une quelconque des revendications 1 à 3, comprenant plus d'un insert.

6. Dispositif de fixation selon la revendication 4, comprenant des inserts (30, 40, 50, 130 ; 230 ; 240) ayant des configurations en coin différentes.

7. Dispositif de fixation selon la revendication 4 ou 5, comprenant des inserts (30, 40, 50, 130) ayant des configurations en coin similaires.

8. Dispositif de fixation selon l'une quelconque des revendications précédentes, tel que lesdites interfaces de fixation (115, 124, 134, 135) sont du type à déclic.

9. Dispositif de fixation selon l'une quelconque des revendications 1 à 8, tel que des ouvertures d'observation (16, 26, 36, 37, 46, 47, 56, 57 ; 116, 117, 126, 136, 137 ; 216 ; 226, 236, 246) nécessaires sont prévues pour ledit moyen formant détecteur dans les états appliqués du dispositif de fixation (I ; II ; III).

10. Véhicule à moteur (1) équipé d'un dispositif de fixation (I ; II ; III) selon l'une quelconque des revendications 1 à 9.

11. Véhicule à moteur selon la revendication 10, tel que ledit dispositif de fixation (I ; II ; III) est destiné à être appliqué à l'intérieur du véhicule, sur la vitre avant (W).
